(19) Europäisches Patentamt
European Patent Office
Office européen des brevets

(11) EP 1 256 594 A1

(12) **EUROPEAN PATENT APPLICATION**

(43) Date of publication:
**13.11.2002 Bulletin 2002/46**

(21) Application number: **01111534.2**

(22) Date of filing: **11.05.2001**

(51) Int Cl.[7]: **C08F 210/06**, C08F 4/64, C08F 4/68, C08J 3/24, C08J 3/28, C08K 3/00 // (C08F210/06, 236:20)

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **THE PROCTER & GAMBLE COMPANY**
**Cincinnati, Ohio 45202 (US)**

(72) Inventors:
- **Hanke, Bernhard**
**65307 Bad Schwalbach (DE)**
- **Rieger, Bernhard**
**89275 Oberelchingen (DE)**
- **Bast, Tim**
**65824 Schwalbach (DE)**

(74) Representative: **Hirsch, Uwe Thomas M.H. et al**
**Procter & Gamble Service GmbH,**
**Sulzbacher Strasse 40**
**65823 Schwalbach am Taunus (DE)**

(54) **Synthetic material comprising a network polymer**

(57) The present invention relates to synthetic material comprising a network polymer. The material has a set of less than 0.1% after having been stretched to 300% of its original length for 10 minutes.

FIG. 1

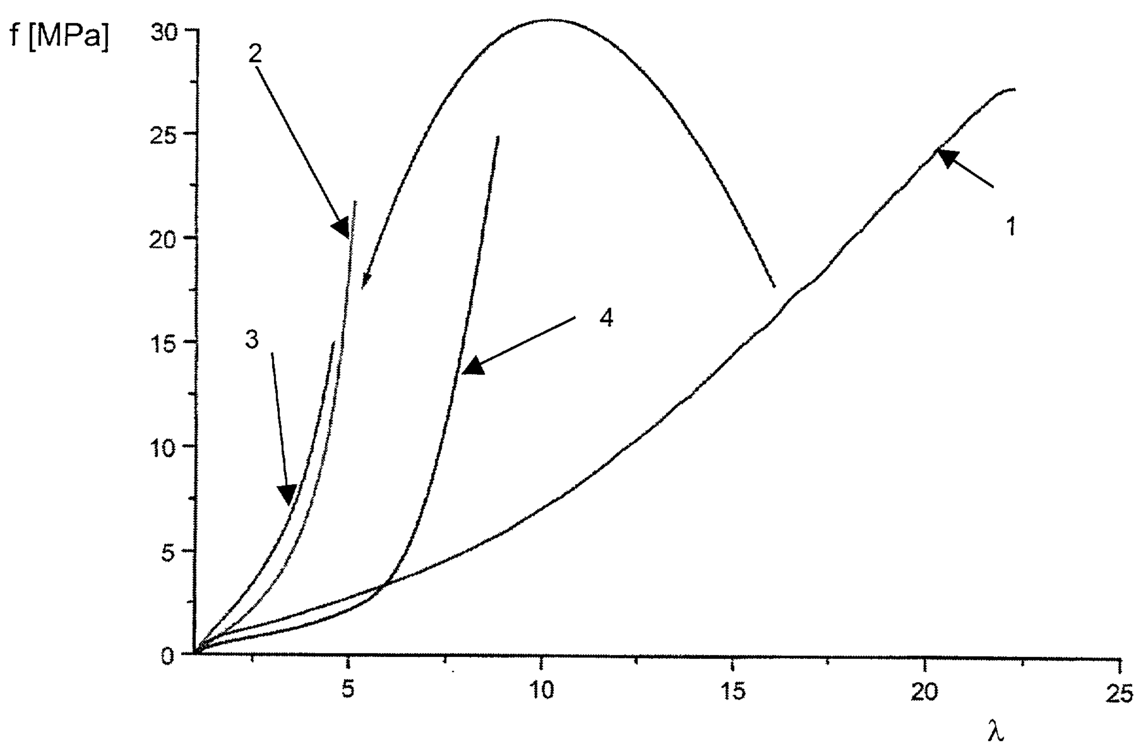




Printed by Jouve, 75001 PARIS (FR)

## Description

### Field of the invention

The present invention relates to synthetic material comprising a network polymer.

### Background

Cross-linked polymers enjoy widespread usage through the industry. Cross-linked polymers differ in many important respects from linear and branched polymers. At elevated temperature, cross-linked polymers generally behave like soft but elastic solids rather than viscous liquids. Vulcanised rubber is one familiar example.

The vulcanisation process involves cross-linking reactions that make rubber useful in applications where mechanical strength is important. Other cross-linked polymers are widely used in paints, printing inks, adhesives, sealants, encapsulants, and electrical and electronic components. Phenol-formaldehyde resins, epoxy resins, amino resins, polyurethanes, unsaturated polyesters, alkyl resins, silicones, polyimides, and acrylics are some commercially important cross-linked materials. These polymers are also generally referred to as thermosets or as network polymers and the cross-linking process is referred to as vulcanisation, curing, thermosetting, or network formation.

The material properties of network polymers of course also depend on the properties of the underlying polymers and on the distribution of these properties caused by production tolerances. Examples for such properties are molecular weight and its distribution, crystallinity, and the like.

Hence it is an object of the present invention to provide a synthetic material comprising a network polymer which overcomes the disadvantages of the prior art network polymers.

It is a further object of the present invention to provide a material comprising a network polymer which is easy and reliably to manufacture and/or to process.

It is a further object of the present invention to provide a synthetic material comprising a network polymer which exhibits superior elastic properties comparable to the properties of vulcanised natural rubber.

### Summary of the invention

The present invention provides a synthetic material comprising a network polymer characterized in that said synthetic material has a set of less than 0.1% after having been stretched to 300% of its original length for 10 minutes.

The present invention further provides a synthetic material comprising a network polymer said polymers comprising a first monomer and a second monomer, said first monomer being a $C_3$ to $C_{20}$olefin, said second monomer being a $C_5$ to $C_{30}$ olefin, r being the relative amount of r dyads in said polymers characterized in that the isotacticity I of said polymers is between 25% and 80% where I is the [mmmm] pentad concentration of said polymers, k is at least 0.2, k being defined by

$$k = \frac{[mrrm] - p^2 (1 - p)^2}{p(1 - p) - p^2 (1 - p)^2}$$

where c([mrrm]) is the [mrrm] pentad concentration of said polymers, a portion of the polymer side chains is connected to form inter-molecular bonds.

The present invention further provides a process for synthesizing a network polymer comprising the steps of

- providing said first monomer being a $C_3$ to $C_{20}$olefin
- providing a second monomer being a $C_5$ to $C_{20}$ olefin
- providing a catalyst of the formula

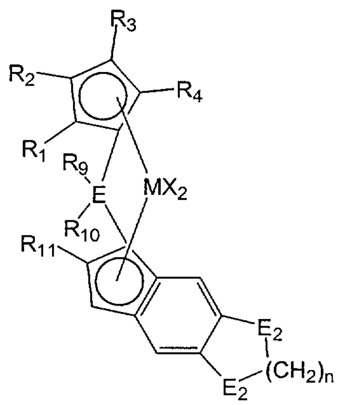

where $R_1$ through $R_8$ refer to linear or branched $C_1$ to $C_{10}$ alkyl, 5- to 7-linked cycloalkyl which in its turn, can carry one ore several $C_1$ to $C_6$ alkyl residues as substituents, $C_6$ to $C_{18}$ arylalkyl or alkylaryl, in which case $R_1/R_2$, $R_3/R_4$, $R_6/R_7$ can be partially or simultaneously integrated into 5- to 7-linked cycloalkyl or aryl rings fused thereto
$R_9$ and $R_{10}$ refer to $C_1$ to $C_8$ alkyl, 4- to 7-linked cycloalkyl, aryl in which case $R_9$, $R_{10}$ can jointly with E form a 4- to 7-linked cycloalkyl
M refers to titanium zirconium, hafnium, vanadium, niobium, tantalum
X refers to a halogen or $C_1$ to $C_8$ alkyl, aryl, benzyl
E refers to carbon, silicon, germanium, or 1.2-ethyl, 1.3-propyl, or 1.4-butyl,
$E_2$ refers to methyl, oxygen or sulphur, and n is 1 or 2.

- providing an activator
- polymerising said first monomer and said second polymer to a random copolymer
- cross-linking said copolymer to form a network polymer

**Brief description of the figures**

FIG. 1 shows the stress strain curves for the un-crosslinked copolymer of example 1, the crosslinked copolymer of example 1, a vulcanised EPDM sample having 4.5% by weight of dien and a low ethylene content, and for vulcanised natural rubber.

FIG. 2 compares the stress strain curves of an uncrosslinked sample with the three different samples of Example 2.

**Detailed description of the invention**

The present invention provides a synthetic material comprising a network polymer. The term "network polymer" as used herein refers to a plurality of polymer molecules which are chemically bonded to each other at side chains extending from the respective backbones of the polymer molecules. The number of molecules, the molecular weight, the number of side chains, the size of the side chains, as well as the number of chemical cross links between the side chains may thereby vary depending on the type of molecule and on the type of intended application.

The present invention provides a synthetic material comprising a network polymer characterized in that said synthetic material has a set of less than 0.1%, preferably less than 0.05%, more preferably less than 0.025%, most preferably less than 0.01% after having been stretched to 300% of its original length for 10 minutes. The term "set" as used herein refers to the relative increase in length after the above stretching of the material. The testing is to be done in accordance with ASTM D174-90 as far as no different instructions are given herein. A suitable machine for this set of experiments is a standard universal tensile tester manufactured by Instron Corp., Canton, MA., USA, model 5564.

The material of the present invention can be used as a synthetic replacement for rubber. The material provides chemical resistance, especially to ozone, and the ability to tolerate high concentrations of filler and oil, yet retains good physical properties.

Preferably, the material of the present invention is based on a copolymer, i.e. a polymer build from two different monomers. Such copolymers offer the advantage of only requiring much smaller production tolerances so that the final composition and the final properties are much easier to control as for example with ter- and even more complex polymers.

The present invention relates to substantially linear polyolefins comprising a first $C_3$-$C_{30}$ monomer and a second C5-$C_{30}$ monomer. The presence of such monomers leads to the presence of stereocentres along the backbone. Two consecutive C atoms in the backbone either have a meso configuration (m dyad) or a rac configuration (r dyad) as is well known in the art. Such polymers having only m dyads are called isotactic, such polymers having only r dyads are syndiotactic. If the polymer comprises a random series of m and r dyads, it is called atactic. For the polymer of the present invention, the isotacticity is defined as the relative content of mmmm pentads, [mmmm]. In theory, [mmmm] can vary between 100% and $([m])^4$. The content of mmmm pentads, [mmmm], can be determined by $^{13}$C-NMR spectroscopy having a sufficiently high resolution to separate the individual pentads.

Preferably, the first monomer of the polymer of the present invention is a $C_3$-$C_{30}$ alk-1-ene, such as for example propene, 1-butene, 2-butene, 1-pentene, 1-hexene, 1-heptene, 1-octene, 1-nonene, 1-decene, 1-dodecene, 1-hexadecene, 1-octadecene, 1-eicosene, and the like. Alternatively, the first monomer may be a cycloolefin such as for example cyclopentene, cyclohexene, norbornadiene and its derivatives. Preferably, the first polymer is propene or butene.

Preferably, the second monomer of the polymer of the present invention is a $C_5$-$C_{30}$ diene. The length of the second monomer leads to the presence of olefinic side chains extending from the polymeric backbone. The presence of a second double bond in each side chain allows to chemically bond side chains to each other. More preferably, the second monomer is 7-methyl-1,6-octadien.

The molecular weight of the polymer of the present invention is preferably at least 100kg/mol, more preferably at least 300kg/mol, yet more preferably 500 kg/mol, yet more preferably at least 1000 kg/mol, yet more preferably 1250 kg/mol, yet more preferably 1500kg/mol, most preferably at least 2000kg/mol. The molecular weight is determined for example by Gel Permeation Chromatography (GPC) with microstyragel as the column material, with 1, 2, 4- trichlorobenzole as solvent, and with the appropriate closely distributed calibration standards such as polyethylene, polystyrene, or the like.

The molecular weight distribution $M_w/M_n$ of the polymer of the present invention, also measured by the above GPC method, is preferably less than 6, more preferably less than 5, yet more preferably less than 4, yet more preferably less than 2.5.

The tacticity [mmmm], i.e. the relative content *of mmmm* pentads, of the polymer of the present invention is preferably at least 10.0%, more preferably at least 15.0%, yet more preferably at least 20.0%, most preferably at least 22.5%. Preferably, the tacticity of the polymer of the present invention is less than 60%, more preferably less 50%, yet more preferably less than 40%, most preferably less than 35%. It is to be noted, however, that for certain applications other tacticities may be required.

Due to the specific stereochemistry of the catalyst of the present invention, the polymeric material of the present invention preferably comprises a relatively high amount of *mrrm* pentads. This pentad is characteristic for a polymer side chain which exhibits a stereochemistry opposite its two neighbouring polymer side chains. In particular in combination with additional neighbouring side chains which are also opposite to the central side chain, i.e. a *mmrrmm* heptad, the opposing central side chain is referred to as a single stereoerror. For comparison, isotactic polymers and syndiotactic polymers are considered to have $[mrrm]=0$ and atactic polymers for statistical reasons have $[mrrm] = [m]^2 [r]^2 = [m]^2(1-[m])^2$. Preferably, the polymer of the present invention has a $[mrrm]$ content substantially higher than an atactic polymer, i.e. a ratio k of at least 0.2, more preferably at least 0.4, yet more preferably at least 0.6, most preferably at least 0.8, where k is defined as

$$k = \frac{[mrrm] - [m]^2\ (1 - [m])^2}{[m](1 - [m]) - [m]^2\ (1 - [m])^2}$$

Preferably, the polymer of the present invention only has a low content of atactic sequences or rather regular sequences as can be seen from its low content of rmrm pentads. Preferably, for the polymer of the present invention $[rmrm]$ preferably is less than 5%, more preferably less tan 4%, yet more preferably less than 3%, most preferably less than 2%.

The melting point of the polymer of the present invention is preferably at least 80°C, more preferably at least 100°C, more preferably at least 120°C, yet more preferably at least 130°C. The glass transition temperature of the polymer of the present invention is preferably below 30°C, more preferably below 10°C, yet more preferably below 0°C, most preferably below -5°C. High melting points and low glass transition temperatures ensure stability and usability of the polymeric material of the present invention over a wide range of temperatures. Melting point and glass transition temperature may be determined for example by Differential Scanning Calorimetry (DSC) methods such as well known art.

The polymer material of the present invention preferably has a low density of below 0.96g/cm$^3$, more preferably

below 0.92g/cm$^3$, yet more preferably below 0.88g/cm$^3$.

The presence of stereoerrors along the backbone of the polymeric materials may for example be achieved by using an appropriate catalyst when polymerising the first and second monomer of the present invention. Suitable processes for manufacturing the polymers of the present invention are described in PCT patent application WO99/52955 incorporated herein by reference. A catalyst combination suitable for the preparation of such polymers is described in PCT patent application WO99/52550 incorporated herein by reference. Other suitable polymers and catalyst/process for polymerising them are disclosed in EP patent application 00126192.4 incorporated herein by reference. Preferably, the processes of PCT patent applications WO99/52550 and WO99/52955 as well as EP patent application 00126192.4 are carried out by temperatures of less than 70°C, more preferably less than 50°C, yet more preferably less than 30°C, yet more preferably less than 20°C, most preferably less than 15°C to increase the molecular weight of the resulting polymer. In order to increase the molecular weight, the polymerisation is preferably carried out in liquid monomer such as in liquid propene. In order to increase the molecular weight, the catalyst is preferably used in combination with the boron activators mentioned in PCT patent application WO99/52950 and with alkyl ligands on the metal ion in the metallocene.

The synthetic material of the present invention may be obtained from the polymers by cross-linking processes such as those known in the art. It is to be noted that cross-linking ore vulcanisation of the material of the present invention can be carried out before the material of the present invention is processes, after the material is processed, or during processing of the material. Depending on the specific nature of the cross-linking process, additional substances may need to be blended in the material of the present invention.

One suitable cross-linking or vulcanisation process is known in the art as "accelerated sulphur vulcanisation". This process requires the material to be blended with additives such as zinc oxide, stearic acid, methyl butyl tin (MBT), tetramethylthiuram dilsulfide (TMTD), and the like.

An alternative process for cross-linking the material of the present invention is by exposing the material to ionising radiation such as electromagnetic radiation (gamma rays, ultraviolet light, visible light, and the like) and particle beams (electrons, positrons, protons, neutrons, α-particles, and the like) whereby electron beam cross-linking is more preferred. It is to be noted that the sterilizing effects of ionising radiation inherently provide additional advantages to the process of the present invention. Absorption of ionising radiation by polymers leads to highly excited states of polymer molecules. If the excitation energy is sufficient to cause breakage of chemical bonds or create other reactive species, then the polymer molecules undergo chemical reactions including cross-linking reactions. Electron beam and ultraviolet light are the two preferred forms of radiation although other types such as gamma rays, visible light, and others are also suitable. The electron beam used for cross-linking is usually 0.2-5 MV, which can penetrate a polymer several millimetres thick. Ultraviolet light, on the other hand, is usually effective only for thin coatings (less than 25 μm), depending on the chemical composition of the organic materials and the nature of the pigments and fillers in the coating.

There exist further suitable crosslinking processes in the art which can be used to manufacture the polymeric network of the present invention. Those include for example blending a photoinitiator or a thermoinitiator into the polymer and to subsequently start crosslinking by exposing the polymer to the respective radiation such as ultraviolet or infrared radiation.

It is another aspect of the present invention to provide bodies, films, fibres, web materials, coatings, foams, adhesives, and the like comprising the crosslinked polymer of the present invention. In most cases, the crosslinking step has to be carried out after the polymeric material has been transformed into its desired configuration and shape.

The present invention provides an article comprising a first element and a second element separated from and joined to said first element, said first element being a body of polymeric material. The present invention further provides a method for manufacturing a body from polymeric material comprising a step of processing said polymeric material selected from the group of to injection moulding, extrusion blow moulding, extrusion, casting, solution sedimentation, and combinations thereof. The present invention further provides a method for processing a body of polymeric material comprising a step selected from the group of thermoforming, laser forming, carving, and combinations thereof.

There are known in the art a wide variety of suitable methods to manufacture and /or to further process bodies from the polymer of the present invention including but not being limited to injection moulding, extrusion blow moulding, extrusion, casting, solution sedimentation, thermoforming, laser forming, carving, combination thereof, and the like.

The body of the present invention has been found to exhibit a relative low tackiness at room temperature due to the high molecular weight of the polymer.

Various additives may be added to the homopolymer of the present invention to change the properties of the polymer such as is well known in the art.

For at least some of the manufacturing techniques and in particular for the moulding processes, it may useful to add to the homopolymer having a low isotacticity a homopolymer having a high isotacticity such as those conventionally known isotactic polypropylenes. Preferably, the isotactic homopolymer is added at a level of at least 20% of

the total weight of the polymeric body, more preferably at a level of at least 40%, yet more preferably at a level of at least 50%, most preferably at a level of at least 60%. Preferably, the low isotacticity homopolymer of the present invention is present in the polymeric body of the present invention at a level of at least 20%, more preferably at least 30%, yet more preferably at least 40%, most preferably at least 50% by total weight of the polymeric body. Preferably, the shrinkage of the moulded is less than 10%, more preferably less than 8%, yet more preferably less than 6%, most preferably less than 4%. Compared to processing substantially pure polypropylene, the blending with the homopolymer of the present invention when making the body of the present invention allows processes such as extrusion to be performed at higher speeds since the required forces, pressure, or torques respectively are lowered.

The second element of the article of the present invention can preferably be made from the same homopolymer as the first element, either having the same low isotacticity or a different isotacticity depending on the intended use of the second element. The configuration of the polymeric material of the second element can also be a body or it could be a foam, a fibre, a film, or the like. Making articles from different grades of the same material is beneficial when recycling material from a disposed article. If the same homopolymer is used for the different elements of the article, no separation step into the various materials is necessary before recycling of the material.

It may be useful to blend additives into the homopolymer of the present invention. A broad variety of such additives is known in the art and can be used accordingly. For example, small amounts of a thermal stabilizer, such as 0.1%-0.25% of a phenol/phosphite blend, can be mixed into the homopolymer of the present invention to increase the thermal stability of the polymer during processing.

The article according to the present invention may be a hygienic article. The term "hygienic article" as used herein refers to articles which are intended to be used in contact with or in proximity to the body of a living being. Such hygienic articles may be disposable or intended for multiple or prolonged use. Such hygienic articles include but are not limited to catheters, tubing, drainage systems, syringes, grafts, prosthetics, body implants, instrumentation, support means, toothbrushes, bed covers, stents, gaskets, pump diaphragms, baby bottle nipples, pacifiers, and the like. Having regard to the specific advantages of the polymers used for the articles of the present invention, it will be readily apparent to the skilled practitioner to apply the bodies of polymeric material according to the present invention in the above and similar hygienic articles.

The article according to the present invention may be a household article. The term "household article" as used herein refers to articles intended to be used when running a household. The household articles of the present invention include but are not limited to garbage bins, storage containers, hoses, toys, kitchenware, clothing and in particular heavy duty clothing up to bullet proof clothing, shoes and in particular show soles, scuba fins and the like, furniture in particular garden furniture, sporting goods, bellows, and the like. Having regard to the specific advantages of the polymers used for the articles of the present invention, it will be readily apparent to the skilled practitioner to apply the bodies of polymeric material according to the present invention in the above and similar household articles.

The article according to the present invention may further be an automotive part including but not being limited to bumper fascia, air dams, side mouldings, fender flares. Grills, body panels, ducts, tires, vibration dampers, flexible joints, window seals, interior parts, door gaskets, automotive boots, and the like. Having regard to the specific advantages of the polymers used for the articles of the present invention, it will be readily apparent to the skilled practitioner to apply and to optionally modify the bodies of polymeric material according to the present invention in the above and similar automotive parts.

The body of polymeric material according to the present invention may also be used as a construction element in an article. Thereby, the functionalities of the body of polymeric material includes but is not limited to supporting, carrying, fixing, protecting other elements of the article and the like. Such articles include but are not limited to cover parts, complex constructions such as buildings (weather stripping, expansion joints, door gaskets and seals, water gaskets, window seals, hoses, ducts, tubes, wire and cable insulation, floor coverings, and the like), cars, household appliances, horticultural and agricultural constructions, and the like. Having regard to the specific advantages of the polymers used for the articles of the present invention, it will be readily apparent to the skilled practitioner to apply and to optionally modify the bodies of polymeric material according to the present invention as construction elements in the above and similar articles.

The present invention provides an article comprising a first element and a second element joined to the first element, the first element comprising a film web material. The present invention further provides a method for manufacturing a film web material comprising a step of processing the aforementioned polymeric material, the step of processing selected from the group of casting, extruding, blowing, and combinations thereof. The present invention further provides a method for processing a film web material comprising the aforementioned polymer, the process comprising a step selected from the group of orienting, bi-axially stretching, crazing, stretching, shrinking, and combinations thereof.

Various additives may be added to the homopolymer of the present invention to change the properties of the polymer such as is well known in the art. For example, blending the polymer with between 2% and 6% by weight of talc and optionally with between 0.1% and 0.25% by weight of phenol/phosphite stabilizer, the processability of the

film material of the present invention can be greatly enhanced.

Compared to processing of conventional, isotactic polypropylene, the addition of the low isotacticity homopolymer of the present invention reduces the requires forces, pressures, or torques respectively to process the polymer.

In the prior art, a wide variety of suitable techniques to manufacture film web materials are known including but not being limited to casting, extruding, blowing, and combinations thereof. In addition, there are known a wide variety of techniques for further processing of film web materials including but nor being limited to orienting, bi-axially stretching, crazing, stretching, shrinking, and combinations thereof. The aforementioned methods for manufacturing and processing film web materials all have specific advantages which are known to the skilled person. Hence, the skilled person will be able to select a suitable method for manufacturing and processing the film web material of the present invention depending on the specific requirement of the respective application of the film web material.

In order to reduce shrinkage in the transverse direction, it may be useful to place air jets at the die exit to add additional cooling.

When storing the film of the present invention on a take-up roll, the use of a release paper may improve the downstream handling of the film.

In order to render the film of the present invention breathable, the polymer may be mixed with a particulate filler material such as calcium carbonate prior to manufacturing the film and be stretched subsequent to manufacturing the film in order to create micro pores at the location of the included filler material by stretching the film material. Preferably, the breathable film material of the present invention has a moisture vapour transmission rate (MVTR) of at least 1000 g per 24 hours per square meter, more preferably at least 2000 g/24hours/$m^2$, yet more preferably at least 3000 g/24h/$m^2$, most preferably at least 4000 g/24h/$m^2$. The method of determining MVTR is well known in the art and should be applied accordingly.

The film web material according to the present invention may also be used as a construction element in an article. Thereby, the functionalities of the film web material includes but is not limited to supporting, carrying, fixing, protecting other elements of the article and the like. Such articles include but are not limited to adhesive tapes, video/audio/data storage tapes, cables, and complex constructions such as buildings (floor coverings, house wraps, and the like), cars, household appliances, horticultural and agricultural constructions, and the like. Having regard to the specific advantages of the polymers used for the articles of the present invention, it will be readily apparent to the skilled practitioner to apply and to optionally modify the film web materials according to the present invention as construction elements in the above and similar articles.

The article of the present invention may also be a packaging article such as produce bags, trash bags, ice bags, shipping sacks, containers, pouches, and the like. The term "packaging article" as used herein refers to articles which are intended to at least partially envelope other articles. The first element of such an article is a specifically contoured piece of the film web material and the second element may be a sealing such as a thermobond seal of the film web material onto itself.

The article of the present invention may also be a package article where the first element of the article is the wrap material used for packaging the second element.

The present invention provides a fibrous web material comprising a plurality of fibres of the polymer of the present invention. The present invention further provides a method for manufacturing fibres from the aforementioned polymeric material comprising a step of processing the polymeric material selected from the group of wet spinning, dry spinning, melt spinning, semi dry spinning (solvent evaporation or sedimentation), and combinations thereof. The present invention further provides a method for manufacturing a fibrous web material comprising the steps of providing fibres of the aforementioned polymeric material and of combining the fibres into a web material. The present invention further provides a method for stabilizing a fibrous web material according to the present invention comprising the steps of providing a fibrous web material and of stabilizing step the fibrous web material.

Various additives may be added to the homopolymer of the present invention to change the properties of the polymer such as is well known in the art.

There are known in the art a wide variety of suitable methods to manufacture and /or processing fibres from the polymer of the present invention including but not being limited to wet spinning, dry spinning, melt spinning, semi dry spinning (solvent evaporation or sedimentation), crazing, and combinations thereof. Fibres suitable for the web materials of the present invention may be mono fibres or the may comprise filaments.

For at least some of the spinning processes, it has been found that the amount of the low isotacticity homopolymer of the present invention present in the fibre of the present invention needs to be reduced in order to accelerate crystallization of the fibres after spinning. Preferably, the fibre of the present invention comprises less than 80% of the low isotacticity homopolymer, more preferably less than 60%, yet more preferably less than 40%, most preferably less than 30%. Alternatively, a high isotacticity polymer having a broader molecular weight distribution may be used in order to accelerate crystallization times.

Compared to spinning of conventional, isotactic polypropylene, the addition of the low isotacticity homopolymer of the present invention reduces the requires forces, pressures, or torques respectively to process the polymer.

There are known in the art a wide variety of suitable methods to manufacture fibrous web material according to the present invention from fibres including but not being limited to meltblowing, spunbonding, carding, air laying, wet laying, weaving, knitting, bailing, and the like. There are further known in the prior art a wide variety of suitable methods for optional stabilization of the fibrous web material of the present invention including but not being limited to hydroentangling, thermo bonding, pressure bonding, air through bonding, needling, resin bonding, combinations thereof, and the like.

It is a further aspect of the present invention to provide an article comprising a fibrous web material according to the present invention. The article according to the present invention may be a hygienic article.

The article of the present invention may also be a clothing article or a household article including but not being limited to bed covers, underwear, tights, socks, gloves, sport clothing, outdoor clothing, low temperature clothing, shoes and show covers, protective clothing such as for motor biking, blankets, covers, bags, items of furniture, and the like. Having regard to the specific advantages of the polymers used for the articles of the present invention, it will be readily apparent to the skilled practitioner to apply and to optionally modify the fibrous web materials according to the present invention in the above and similar articles.

The fibrous web material according to the present invention may also be used as a construction element in an article. Thereby, the functionalities of the fibrous web material includes but is not limited to supporting, carrying, fixing, protecting other elements of the article and the like. Such articles include but are not limited to adhesive tapes, protective wraps, complex constructions such as buildings (floor coverings, house wraps, and the like), cars, household appliances, horticultural and agricultural constructions (geotextiles), and the like. Having regard to the specific advantages of the polymers used for the articles of the present invention, it will be readily apparent to the skilled practitioner to apply and to optionally modify the fibrous web materials according to the present invention as construction elements in the above and similar articles.

The article of the present invention may further a membrane such as in filters, car batteries, and the like. Having regard to the specific advantages of the polymers used for the articles of the present invention, it will be readily apparent to the skilled practitioner to apply and to optionally modify the fibrous web materials according to the present invention in the above and similar articles.

The present invention provides a coating composition for covering at least a portion of the surface of an element with a polymeric coating according to the present invention. The present invention further provides an article comprising an element and the aforementioned polymeric coating material covering at least portion of the surface of said element. The present invention further provides a method for coating an element with the aforementioned polymeric coating material comprising a step selected from the group of dip coating, spray coating, emulsion coating, and combinations thereof.

It has been found that the coating of the present invention can be applied at relatively low basis weights. Preferably, the basis weight of the coating of the present invention is less than 50 grams per square meter, more preferably less than 40 $g/m^2$, yet more preferably less than 30 $g/m^2$, yet more preferably less than 20 $g/m^2$, most preferably less than 10 $g/m^2$.

It is a further aspect of the present invention to provide an article comprising an element, at least a portion of the surface the element being covered with the coating material according to the present invention.

In the prior art, a wide variety of suitable techniques to manufacture coating articles are known including but not being limited to dip coating, spray coating, emulsion coating, and combinations thereof. The coating of the present invention is not limited to a specific substrate as long as the polymer of the coating is capable of sufficiently adhering to the substrate material. Suitable substrates include but are not limited to bodies of various material such as metal, polymer, wood, and the like, woven and nonwoven web materials, films, and the like. The aforementioned methods for manufacturing coating articles all have specific advantages which are known to the skilled person. Hence, the skilled person will be able to select a suitable method for manufacturing the coating material of the present invention depending on the specific requirement of the respective application of the coating material.

In order to render the coating of the present invention breathable, the polymer may be mixed with a particulate filler material such as calcium carbonate prior to manufacturing the coating and be stretched subsequently (before or after contacting the substrate) in order to create micro pores at the location of the included filler material by stretching the coating material. Preferably, the breathable film material of the present invention has a moisture vapour transmission rate (MVTR) of at least 1000 g per 24 hours per square meter, more preferably at least 2000 $g/24hours/m^2$, yet more preferably at least 3000 $g/24h/m^2$, most preferably at least 4000 $g/24h/m^2$. The method of determining MVTR is well known in the art and should be applied accordingly.

The coated article of the present invention could be a hygienic article. The coating material according to the present invention may also be used as a construction element in an article. Thereby, the functionalities of the coating material includes but is not limited to heat insulation, electric insulation, shock absorption, cushioning, acoustic wave damping, protecting other elements of the article, corrosion protection, allowance for relative movement of other elements, slip reduction, and the like. Such articles include but are not limited to toys, furniture, clothing, shoes, sport

equipment, grips, complex constructions such as buildings (floor coverings, caulking, sealants, ridge/crack filler, and the like), cars, household appliances, and the like. Having regard to the specific advantages of the polymers used for the articles of the present invention, it will be readily apparent to the skilled practitioner to apply and to optionally modify the coating materials according to the present invention as construction elements in the above and similar articles.

The present invention provides a polymeric foam material. The foam material comprises the polymer of the present invention. The present invention further provides a method for manufacturing the polymeric foam material of the present invention comprising a step of processing the polymeric material, said step of processing selected from the group of inert gas expansion, evaporated solvent expansion, reactive reagent gas expansion, high internal phase emulsion, bead expansion, and combinations thereof.

In the prior art, a wide variety of suitable techniques to manufacture foam materials are known including but not being limited to inert gas expansion, evaporated solvent expansion, reactive reagent gas expansion, high internal phase emulsion, bead expansion, and combinations thereof. The aforementioned methods for manufacturing foam materials all have specific advantages which are known to the skilled person. Hence, the skilled person will be able to select a suitable method for manufacturing the foam material of the present invention depending on the specific requirement of the respective application of the foam material. Suitable gases or evaporated solvents for expanding the foams of the present invention include but are not limited to $CO_2$, $N_2$, propene, pentane, and the like. It has been found that due to the low tacticity of the polymer, the processability of the polymer during manufacture of the foam has been greatly improved.

The foam material according to the present invention may also be used as a construction element in an article. Thereby, the functionalities of the foam material include but is not limited to heat insulation, electric insulation, shock absorption, cushioning, acoustic wave damping, protecting other elements of the article, sealing, packaging, storing, providing buoyancy, and the like. Such articles include but are not limited to toys, furniture, mattresses, carpets, clothing, shoes, sport equipment, complex constructions such as buildings (floor coverings, house wraps, and the like), cars, household appliances, and the like. Having regard to the specific advantages of the polymers used for the articles of the present invention, it will be readily apparent to the skilled practitioner to apply and to optionally modify the foam materials according to the present invention as construction elements in the above and similar articles. It is particularly preferred to combine the foam material with a conventional polypropylene material to form the article. In this case, recycling of the material does not require separation of the different materials.

The foam material of the present invention may be oil absorbent and may be rendered water absorbent by suitable surface energy modifiers. Suitable surface energy modifiers are well known in the art. In case the foam material of the present invention is absorbent, the foam material may used in instances including but not being limited to oil absorption, solvent absorption, spill absorption, liquid distribution, liquid transportation, and the like. To improve the absorbency of the foam of the present invention, various additives such as those known in the art may be added to the external and internal surfaces of the foam of the present invention. The foam material of the present invention may further be used to deliver absorbed liquids such as for example adhesive, shoe polish, ink, lubricants and the like upon compression of the foam material.

It is a further aspect of the present invention to blend the polymeric network of the present invention with other synthetic or natural polymers, in particular including those polymers which are already flexible or elastic. Such synthetic polymers include for example various grades of polypropylene such as isotactic, syndiotactic, atactic, isotactic with randomly distributed single stereo errors, hemiisotactic, various degrees of molecular weight, tacticity ( mmmm pentad content), and the like. Such natural polymers include for example natural rubber and preferably vulcanised natural rubber. The properties of these blends can be adjusted by adjusting the respective composition ratios. In particular, the blends of the present invention are suitable for applications for which it is important to have a high elasticity with a low set such as for example tires, joints, and the like.

## Examples

For illustration of the materials of the present invention two examples are given in the following. The examples are based on the same copolymer comprising 96.5% by weight propene and 2.7% by weight 7-methyl-1,6-octadiene monomers. The copolymer was synthesized in 300mL of toluol at a temperature of 30°C using a 1-(9 fluorenyl)-2-(1-5.6-cyclopenta-2-methyl)indenyl) ethane zirconocene dichloride catalyst activated with an alumoxane at an AL/Zr ratio of 2000 (see WO99/52950 incorporated herein by reference).

Example 1 has been obtained by crosslinking the above copolymer with metal oxide vulcanisation combined with accelerated-sulphur vulcanisation. 100g copolymer were first broken down in a lab mixer. After initial breakdown the vulcanisation system components (in % weight by weight of the copolymer: zinc oxide 5%, stearic acid 3%, MBT (2-mercaptobenzothiazole) 0.5%, TMTD (tetramethylthiuramdisulfide) 1.5%, sulphur 1.5%) were added to the copolymer at intervals to complete the formulation. After mixing the material was calendared up to 160°C for 15 minutes using three chrome plated steel rolls to form then sheets of 1mm thickness on a lab conveyor.

Example 2 has been obtained by crosslinking the above copolymer via electron beam treatment. About 10g of the copolymer were vacuum compression moulded at 40 °C to films (1mm thick) using an aluminium ring (height 13 mm, diameter 30mm). Three discs were then post cured using a 10 KeV electron beam (Rhodotron TT 300) to reach 10, 20 and 100 kGy dose level respectively.

FIG.1 compares the stress (f[MPa]) strain (λ) curves for the un-crosslinked copolymer of example 1 (1), the crosslinked copolymer of example 1 (2), a vulcanised EPDM sample having 4.5% by weight of dien and a low ethylene content (3), vulcanised natural rubber (4). The stress strain curves have been obtained from test sample having dimensions of approximately 2 x 5 x 50 mm. A suitable machine for this set of experiments is a standard universal tensile tester manufactured by Instron Corp., Canton, MA., model 5564. As can be seen from FIG. 1, the vulcanisation leads to an improvement of the elastic behaviour of the crosslinked copolymer of the present invention. In comparison to vulcanised natural rubber, the copolymer of the present invention shows superior elastic properties already at low strains. In comparison to the crosslinked EPDM sample, the crosslinked copolymer of the present invention exhibit similar elastic properties in combination with a significantly superior tensile strength.

FIG. 2 compares the stress (f[MPa]) strain (λ) curves of an uncrosslinked sample (1) with the three different samples of Example 2, namely 10kGy (2), 30kGy (3), and 100 kGy (4). The uncrosslinked sample as well as the 10kGy sample exhibit plastic behaviour. The 30kGy sample exhibit a surprising behaviour. After a wide interval of approximately constant tensile force, the sample exhibits elastic behaviour at higher stresses. On repeating the experiment, the sample continuous to exhibit the elastic behaviour of the first stretching. The 100 kGy sample has been crosslinked to a relatively large extent leading to a high tensile force already at relatively low strains.

## Claims

**1.** A synthetic material comprising a network polymer
**characterized in that**
said synthetic material has a set of less than 0.1% after having been stretched to 300% of its original length for 10 minutes.

**2.** A synthetic material comprising a network polymer

said polymers comprising a first monomer and a second monomer,
said first monomer being a $C_3$ to $C_{20}$olefin,
said second monomer being a $C_5$ to $C_{30}$ olefin,
[*m*] being the relative amount of *m* dyads in said polymers
[*r*] being the relative amount of *r* dyads in said polymers

**characterized in that**
the isotacticity I of said polymers is between 25% and 80% where I is [mmmm], the *mmmm* pentad concentration of said polymers,
k is at least 0.2, k being defined by

$$k = \frac{[mrrm] - [m]^2\,(1 - [m])^2}{[m](1 - [m]) - [m]^2\,(1 - [m])^2}$$

where [*mrrm*] is the *mrrm* pentad concentration of said polymers, and a fraction of the polymer side chains is connected to form inter-molecular bonds.

**3.** A synthetic material according to Claim 2
wherein
said first monomer is propene.

**4.** A synthetic material according to Claim 2 or Claim 3
wherein
said second monomer is a diene.

**5.** A synthetic material according to Claim 4
wherein

said second monomer is 7-methyl-1,6-octadiene.

**6.** A process for synthesizing a network polymer comprising the steps of

- providing said first monomer being a $C_3$ to $C_{20}$olefin
- providing a second monomer being a $C_5$ to $C_{20}$ olefin
- providing a catalyst of the formula

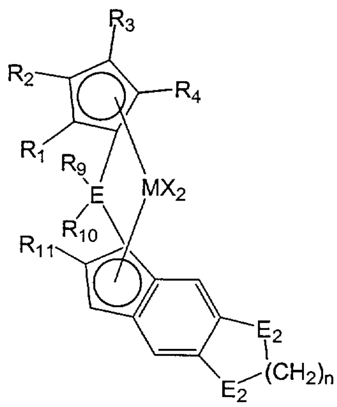

where $R_1$ through $R_8$ refer to linear or branched $C_1$ to $C_{10}$ alkyl, 5- to 7-linked cycloalkyl which in its turn, can carry one ore several $C_1$ to $C_6$ alkyl residues as substituents, $C_6$ to $C_{18}$ arylalkyl or alkylaryl, in which case $R_1/R_2$, $R_3/R_4$, $R_6/R_7$ can be partially or simultaneously integrated into 5- to 7-linked cycloalkyl or aryl rings fused thereto
$R_9$ and $R_{10}$ refer to $C_1$ to $C_8$ alkyl, 4- to 7-linked cycloalkyl, aryl in which case $R_9$, $R_{10}$ can jointly with E form a 4- to 7-linked cycloalkyl
M refers to titanium zirconium, hafnium, vanadium, niobium, tantalum
X refers to a halogen or $C_1$ to $C_8$ alkyl, aryl, benzyl
E refers to carbon, silicon, germanium, or 1.2-ethyl, 1.3-propyl, or 1.4-butyl,
$E_2$ refers to methyl, oxygen or sulphur, and n is 1 or 2.

- providing an activator
- polymerising said first monomer and said second polymer to a random copolymer
- cross-linking said copolymer to form a network polymer

**7.** A process for synthesizing a network polymer according to Claim 6
wherein
said step of cross-linking involves cross-linking the copolymers by means of ionising radiation.

FIG. 1

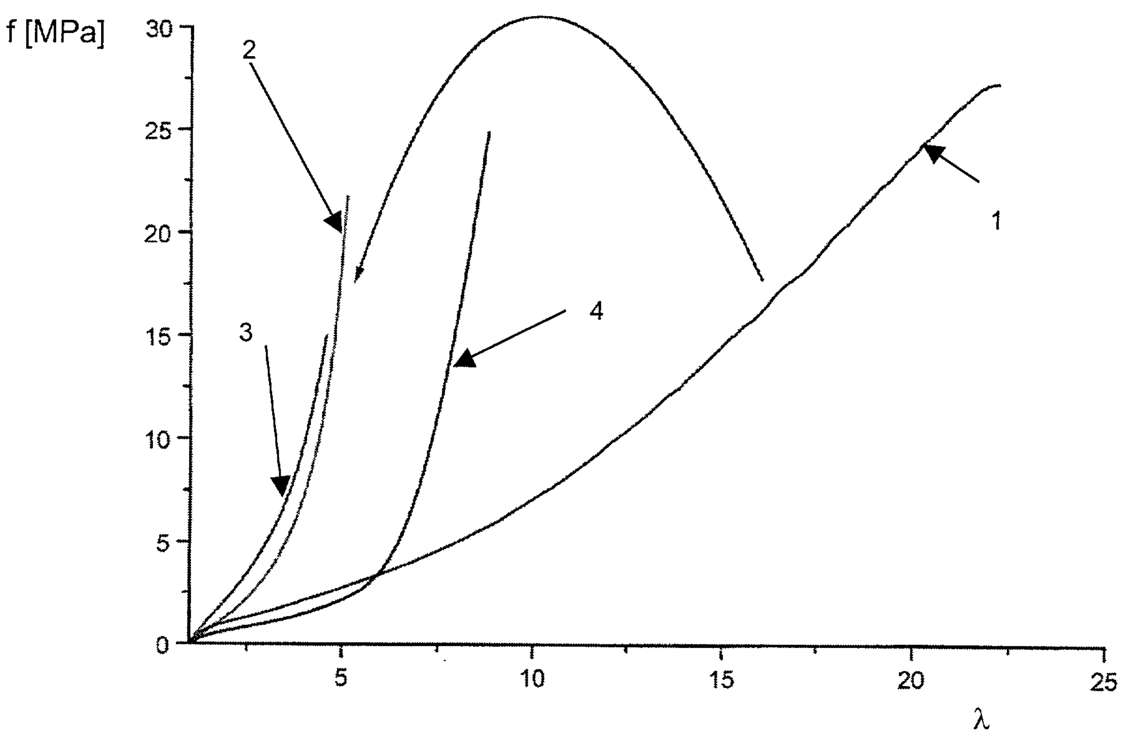

FIG. 2

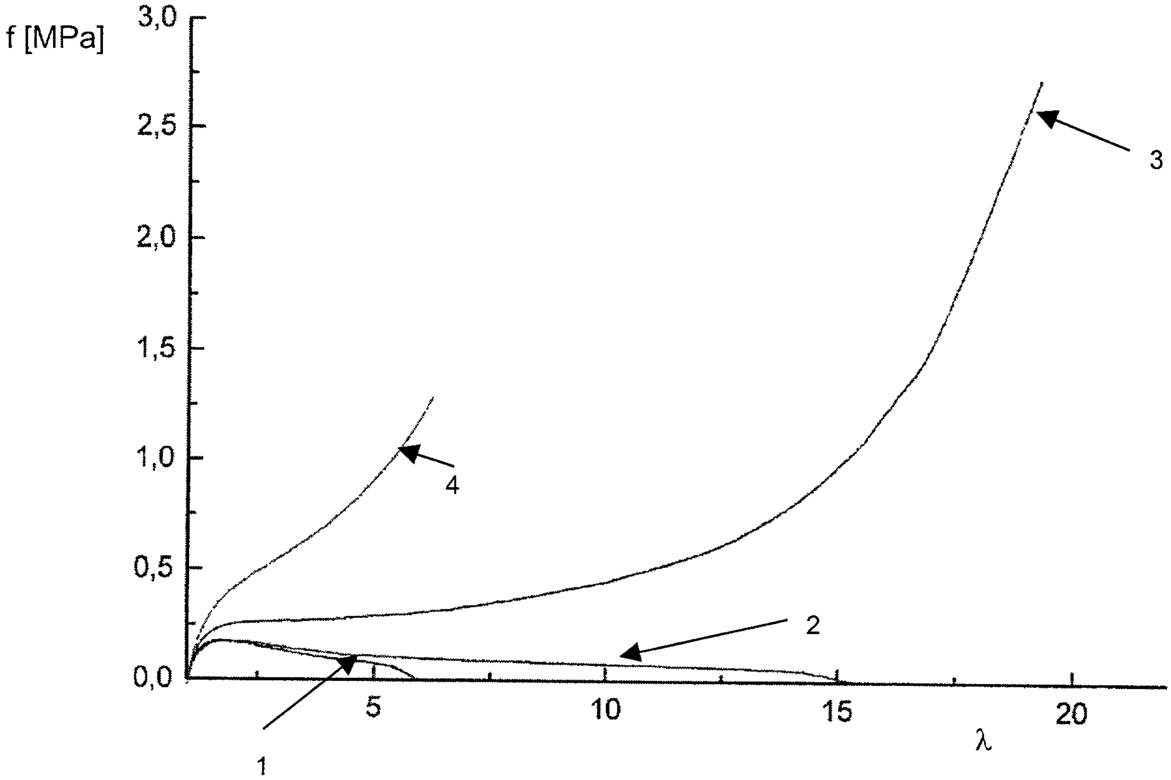

European Patent Office

# PARTIAL EUROPEAN SEARCH REPORT

which under Rule 45 of the European Patent Convention shall be considered, for the purposes of subsequent proceedings, as the European search report

Application Number: EP 01 11 1534

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br><br><br><br>A | EP 0 458 731 A (MITSUBISHI PETROCHEMICAL CO) 27 November 1991 (1991-11-27)<br>* claims 10-20 *<br>* page 4, line 36 - line 40 *<br>* page 6, line 13 - line 16 *<br>* page 6, line 34 - line 40 *<br>* page 7, line 10 - line 25 *<br>* page 8, line 16 - line 28 *<br>* examples 1,3,5; tables 1,2 *<br>--- | 1-5<br><br><br><br><br>6,7 | C08F210/06<br>C08F4/64<br>C08F4/68<br>C08J3/24<br>C08J3/28<br>C08K3/00<br>//(C08F210/06, 236:20) |
| X | US 5 670 595 A (MEKA PRASADARO ET AL) 23 September 1997 (1997-09-23)<br>* claims 1-4,12-20 *<br>* examples 28-33 *<br>--- | 1-4,6,7 | |
| X<br><br><br><br>A | WO 91 18030 A (ICI PLC) 28 November 1991 (1991-11-28)<br>* claims 1,4-6 *<br>* page 4, line 28 - page 5, line 8 *<br>* page 5, line 26 - page 6, line 16 *<br>* examples SE1-SE7 *<br>---<br>-/-- | 1-5<br><br><br><br>6 | |

| TECHNICAL FIELDS SEARCHED (Int.Cl.7) |
|---|
| C08F<br>C08J<br>C08K |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| MUNICH | 26 October 2001 | Hollender, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

European Patent Office

**INCOMPLETE SEARCH SHEET C**

Application Number
EP 01 11 1534

Claim(s) searched completely:
3-7

Claim(s) searched incompletely:
1-2

Reason for the limitation of the search:

Present claim 1 relates to a synthetic material comprising a network polymer defined by reference to a desirable characteristic or property, namely that said synthetic material has a set of less than 0.1% after having been stretched to 300% of its original length for 10 minutes.
Claim 1 claims covers all synthetic material comprising a network polymer having this characteristic or property, whereas the application provides support within the meaning of Article 84 EPC and/or disclosure within the meaning of Article 83 EPC for only a very limited number of such synthetic materials.
In the present case, claim 1 so lacks support, and the application so lacks disclosure, that a meaningful search over the whole of the claimed scope is impossible.
Independent of the above reasoning, the claim also lacks clarity (Article 84 EPC). An attempt is made to define the synthetic material by reference to a result to be achieved. Again, this lack of clarity in the present case is such as to render a meaningful search over the whole of the claimed scope impossible. Consequently, the search has been carried out for those parts of the claim which appear to be clear, supported and disclosed, namely those parts relating to the synthetic material prepared in the examples.

Present claim 2 relates to a synthetic material comprising a network polymer defined (inter alia)
by reference to the following parameter:
P1: k should be at least 0.2 (k being defined by the ratio as defined in claim 2, which requires to know the mrrm pentad concentration and the relative amount of m dyads in the network polymer.
The use of this parameter in the present context is considered to lead to a lack of clarity within the meaning of Article 84 EPC. It is impossible to compare the parameter the applicant has chosen to employ with what is set out in the prior art. The lack of clarity is such as to render a meaningful complete search impossible. Consequently, the search has been restricted to synthetic materials resulting from a combination of the embodiments as specified in claims 2, 3 and 6.

European Patent Office

# PARTIAL EUROPEAN SEARCH REPORT

Application Number
EP 01 11 1534

| DOCUMENTS CONSIDERED TO BE RELEVANT | | | CLASSIFICATION OF THE APPLICATION (Int.Cl.7) |
|---|---|---|---|
| Category | Citation of document with indication, where appropriate, of relevant passages | Relevant to claim | |
| X | DATABASE WPI<br>Week 199025<br>Derwent Publications Ltd., London, GB;<br>AN 1990-188936<br>XP002181287<br>& JP 02 123114 A (JAPAN SYNTHETIC RUBBER CO LTD), 10 May 1990 (1990-05-10)<br>* abstract * | 2,4,5 | |
| A | RIEGER ET AL: "Novel metallocene catalyzed polypropene homo- and brush-copolymers: control of new morphologies and beyond"<br>POLYMERIC MATERIALS SCIENCE AND ENGINEERING, WASHINGTON, DC, US,<br>vol. 80, 21 March 1999 (1999-03-21), pages 51-52, XP002110149<br>ISSN: 0743-0515<br>* the whole document * | 1-6 | TECHNICAL FIELDS SEARCHED (Int.Cl.7) |
| A | EP 0 512 741 A (MITSUBISHI PETROCHEMICAL CO) 11 November 1992 (1992-11-11)<br>* claims 1,2,6,7,13,16 *<br>* page 9, line 46 - line 49 *<br>* examples 1-7,10,11; table 1 * | 2-6 | |

EPO FORM 1503 03.82 (P04C10)

# ANNEX TO THE EUROPEAN SEARCH REPORT ON EUROPEAN PATENT APPLICATION NO. EP 01 11 1534

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2001

| Patent document cited in search report | Publication date | Patent family member(s) | Publication date |
|---|---|---|---|
| EP 0458731 A | 27-11-1991 | JP 2924087 B2 | 26-07-1999 |
| | | JP 4028706 A | 31-01-1992 |
| | | EP 0458731 A1 | 27-11-1991 |
| | | US 5262503 A | 16-11-1993 |
| US 5670595 A | 23-09-1997 | CA 2226947 A1 | 06-03-1997 |
| | | EP 0847408 A1 | 17-06-1998 |
| | | EP 0942017 A2 | 15-09-1999 |
| | | JP 11511499 T | 05-10-1999 |
| | | PL 325286 A1 | 20-07-1998 |
| | | WO 9708216 A1 | 06-03-1997 |
| WO 9118030 A | 28-11-1991 | AU 655584 B2 | 05-01-1995 |
| | | AU 7867891 A | 10-12-1991 |
| | | DE 69114491 D1 | 14-12-1995 |
| | | DE 69114491 T2 | 21-03-1996 |
| | | EP 0528908 A1 | 03-03-1993 |
| | | ES 2079660 T3 | 16-01-1996 |
| | | WO 9118030 A1 | 28-11-1991 |
| | | US 5418308 A | 23-05-1995 |
| JP 2123114 A | 10-05-1990 | JP 2682076 B2 | 26-11-1997 |
| EP 0512741 A | 11-11-1992 | JP 3193066 B2 | 30-07-2001 |
| | | JP 4331214 A | 19-11-1992 |
| | | DE 69211769 D1 | 01-08-1996 |
| | | DE 69211769 T2 | 19-12-1996 |
| | | EP 0512741 A1 | 11-11-1992 |
| | | US 5225501 A | 06-07-1993 |
| JP 11292923 A | 26-10-1999 | NONE | |

EPO FORM P0459

For more details about this annex : see Official Journal of the European Patent Office, No. 12/82